(19) Europäisches Patentamt
European Patent Office
Office européen des brevets

(11) **EP 3 260 887 A1**

(12) **EUROPEAN PATENT APPLICATION**

(43) Date of publication:
**27.12.2017 Bulletin 2017/52**

(51) Int Cl.:
**G01V 1/00** *(2006.01)*    **G01V 1/37** *(2006.01)*

(21) Application number: **17305761.3**

(22) Date of filing: **21.06.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **23.06.2016   US 201662353614 P**

(71) Applicant: **CGG Services SAS
91300 Massy (FR)**

(72) Inventors:
• **POOLE, Gordon**
  **91300 MASSY (FR)**
• **TEYSSANDIER, Benoît**
  **91300 Massy (FR)**

(74) Representative: **Petit, Maxime
Ipsilon
Le Centralis
63, avenue du Général Leclerc
92340 Bourg-la-Reine (FR)**

(54) **METHODS AND DATA PROCESSING APPARATUS FOR SEISMIC SIGNAL SEPARATION**

(57)     There is a method for correcting seismic wave propagation paths through the earth. The method includes determining (600) a first fixed shooting sequence for a first bandlimited seismic source (210); determining (602) a second shooting sequence for a second bandlimited seismic source (220), wherein the second shooting sequence includes second shooting positions that correspond to second energy emissions, and the second energy emissions differ from the first energy emissions in at least one of an emission time, phase and amplitude; receiving (604) raw seismic data recorded with seismic receivers (252) and generated as a result of the first and second energy emissions, wherein the raw seismic data is indicative of seismic wave paths from the first and second bandlimited seismic sources to the seismic receivers; separating (606) the raw seismic data into a first bandlimited set corresponding to the first bandlimited seismic source and a second bandlimited set corresponding to the second bandlimited seismic source; and correcting (608) the seismic wave paths, from the first and second bandlimited seismic sources to the seismic receivers, based on at least one of the first and second bandlimited sets.

FIG. 6

**Description**

CROSS REFERENCE TO RELATED APPLICATIONS

This application claims priority and benefit from U.S. Provisional Patent Application No. 62/353,614, filed on June 23, 2017, for "Marine vibrator signal separation," the content of which is incorporated in its entirety herein by reference.

BACKGROUND

TECHNICAL FIELD

Embodiments of the subject matter disclosed herein generally relate to separating (deblending) seismic data acquired with receivers as a result of simultaneously activating the seismic sources.

DISCUSSION OF THE BACKGROUND

A structure of underground formations is customarily explored with seismic surveys to generate images used, for example, to locate gas and oil reservoirs. The seismic surveys acquire and study reflections of seismic signals injected in the surveyed formations. The signals are reflected, refracted and/or transmitted when encountering variations of propagation velocity. These signals are indicative of seismic paths of corresponding waves that were emitted by the seismic sources and recorded by the corresponding receivers. The receivers detect and record these reflections as seismic data. In time, the amount of seismic data and the complexity of data processing have increased tremendously due to the increased data processing capacity (both hardware and software) and development of survey equipment (seismic signal sources, receivers, etc.). These improvements have yielded sharper images of the underground formations, for bigger volumes and based on a higher density of information. The time necessary to acquire the survey data (in the order of weeks if not months for a marine seismic survey) has continued to remain an important limitation to the cost-effectiveness of this type of geological prospecting.

One way to shorten the survey time is to use a technique known as "simultaneous source acquisition." In this type of acquisition, time intervals between source activations (i.e., generating signals incident to the surveyed underground formation) are shorter than a listening time necessary to record all the reflections after one source's activation. Simultaneous source acquisition is now performed on land and in marine environments (with ocean bottom receivers or towed streamers), with continuous or non-continuous recording. Using simultaneous source acquisition yields blended data (i.e., data recorded by the receivers includes overlapping reflections due to signals produced by both seismic sources), and, therefore, an additional data preprocessing step (known as "deblending") becomes necessary to extract datasets correspond to each seismic source.

Numerous deblending algorithms have been developed in the last years. However, these algorithms usually exploit particular data acquisition features related to geometry (source and receiver positions), which is not easy to implement and maintain in a real seismic survey.

Accordingly, it is desirable to develop efficient deblending methods usable for data gathered in more (or most) simultaneous source acquisition scenarios.

SUMMARY

According to an embodiment, there is a method for correcting seismic wave propagation paths through the earth. The method includes determining a first fixed shooting sequence for a first bandlimited seismic source, wherein the first fixed shooting sequence includes equidistant first shooting positions that correspond to first energy emissions; determining a second shooting sequence for a second bandlimited seismic source, wherein the second shooting sequence includes second shooting positions that correspond to second energy emissions, and the second energy emissions differ from the first energy emissions in at least one of an emission time, phase and amplitude; receiving raw seismic data recorded with seismic receivers and generated as a result of the first and second energy emissions, wherein the raw seismic data is indicative of seismic wave paths from the first and second bandlimited seismic sources to the seismic receivers; separating the raw seismic data into a first bandlimited set corresponding to the first bandlimited seismic source and a second bandlimited set corresponding to the second bandlimited seismic source; and correcting the seismic wave paths, from the first and second bandlimited seismic sources to the seismic receivers, based on at least one of the first and second bandlimited sets.

According to another embodiment, there is a computing device for correcting seismic wave propagation paths through the earth. The computing device includes a processor configured to determine a first fixed shooting sequence for a first bandlimited seismic source, wherein the first fixed shooting sequence includes equidistant first shooting positions that correspond to first energy emissions, and determine a second shooting sequence for a second bandlimited seismic source, wherein the second shooting sequence includes second shooting positions that correspond to second energy emissions, and the second energy emissions differ from the first energy emissions in at least one of an emission time, phase and amplitude. The computing device also includes an interface connected to the processor and configured to receive raw seismic data recorded with seismic receivers and generated as a result of the first and second energy emissions, wherein the raw seismic data is indicative of seismic wave paths from the first and second bandlimited seismic sources to the seismic receivers. The processor is further configured to separate the raw seismic data into a first bandlimited set corresponding to the first bandlimited seismic source and a second bandlimited set corresponding to the second bandlimited seismic source, and correct the seismic wave paths, from the first and second bandlimited seismic sources to the seismic receivers, based on at least one of the first and second bandlimited sets.

According to another embodiment there is a computer-readable recording medium storing executable codes which, when executed by a data processing unit make the data processing unit to perform a method as discussed above.

**BRIEF DESCRIPTION OF THE DRAWINGS**

The accompanying drawings, which are incorporated in and constitute a part of the specification, illustrate one or more embodiments and, together with the description, explain these embodiments. In the drawings:

Figure 1A illustrates the energy in the receiver domain in the F-K (frequency-wavenumber) domain to be a cone bounded by the water velocity for a single source;
Figure 1B illustrates the energy in the receiver domain in the F-K (frequency-wavenumber) domain to be multiple cones that overlap for two sources;
Figure 2 illustrates a marine seismic data acquiring system;
Figure 3A illustrates a gather corresponding to a low-frequency bandlimited source;
Figure 3B illustrates a gather corresponding to a high-frequency bandlimited source;
Figure 3C illustrates a gather corresponding to low-frequency and high-frequency bandlimited sources;
Figure 4 illustrates the spectrum of two bandlimited sources;
Figure 5A illustrates a gather corresponding to a low-frequency bandlimited source shot with a two to one pattern;
Figure 5B illustrates a gather corresponding to a high-frequency bandlimited source shot with at equidistant times;
Figure 5C illustrates a gather corresponding to the sum of the gathers illustrated in Figures 5A and 5B;
Figure 6 is a flowchart of a method for deblending simultaneously recorded seismic data;
Figure 7 illustrates the shooting of two bandlimited sources having different sweeps;
Figure 8 illustrates the shooting of two bandlimited sources with alternating time delays;
Figure 9 is a flowchart of another method for deblending simultaneously recorded seismic data;
Figure 10 is a flowchart of still another method for deblending simultaneously recorded seismic data;
Figure 11 illustrates a computing device that implements any of the methods discussed herein.

**DETAILED DESCRIPTION**

**The** following description of the embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to marine vibrators that are operated in a simultaneous manner for generating seismic data. However, similar embodiments and methods may be used for a land data acquisition system.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

In various embodiments detailed in this section, seismic wavefields emitted by at least two bandlimited seismic sources are interfering and they are recorded as such at the receivers. An objective of the novel approaches discussed herein is to separate these wavefields in a first data set that corresponds to the first bandlimited source and a second data set that corresponds to the second bandlimited source.

A bandlimited seismic source (see for example, U.S. Patent no. 8,837,259) is understood herein to be a source that is able to generate acoustic waves in a limited bandwidth, e.g., 10 to 40 Hz, or 0-10 Hz, or any other frequency range that is not larger than 100 Hz. In this regard, note that a typical seismic source that is not band limited is an air gun. A conventional air gun, when fired, emits acoustic waves covering a large frequency range, for example, from 0 to 2,000 Hz. Thus, according to the above noted definition, a traditional air gun is not a bandlimited source. A typical bandlimited seismic source is a marine vibrator, i.e., a source that vibrates over some time to generate the seismic waves. The generated seismic waves may have a changing frequency, for example, a linear sweep from 10 Hz to 40 Hz, or may emit in the bandlimted frequency range continuously with a pseudo-random emission. A vibrator emits a frequency at each instant and this frequency changes in time. This means that the vibrator emits a sweep of waves, in the given frequency range.

The embodiments to be discussed now use novel ways for firing the bandlimited sources such that the interfering wavefields can be separated, processed and then subtracted from the raw data, which results in signal separation.

Two recent papers (Robertsson, J., Amundsen, L, and Sjoen Pedersen, A., 2016, "Wavefield signal apparition, part I -Theory," EAGE conference proceedings, and Sjoen Pedersen, A., Amundsen, L, and Robertsson, J., 2016, "Wavefield signal apparition, Part II - Application to simultaneous sources and their separation," EAGE conference proceedings) have presented a source separation algorithm called "Wavefield Signal Apparition."

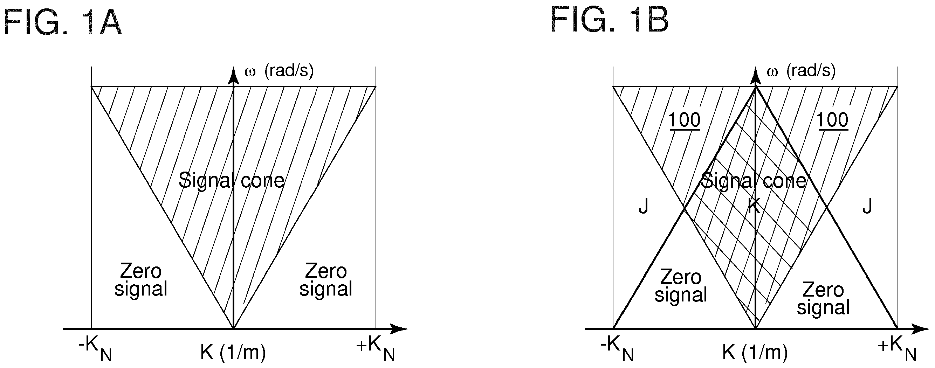

The authors of this theory noted that with a conventional marine acquisition, the energy in the receiver domain will be limited in the F-K (frequency-wavenumber) domain to a cone bounded by the water velocity (which is about 1500 m/s), as illustrated in Figure 1A. As described in these papers, the Nyquist-Shannon sampling theory indicates that for an analogue signal to be recovered from an infinite number of equidistant samples (sampling rate $k_s$), the underlying signal has to be bandlimited to $k \leq k_s/2$. Thus, the authors of these papers proposed a 2:1 shot-to-shot pattern for two seismic sources to duplicate the energy at the spatial Nyquist. In this case, the wavefield signal data gathers in the FK domain are illustrated in Figure 1B. The K part of the data remains at the signal cone centred around k=0 of the signal and the J part of the data is mapped to a signal cone centred around the Nyquist wavenumber $k_N$. Based on a relation between K and J proposed in these papers, if either K or J is known as illustrated in Figure 1A, then, the other term can be calculated. However, a problem with this method is that the data in region 100 is still contaminated. Note that Figures 1A and 1B are taken from the first reference noted above, m is a modulation function and N is the number of uniformly space source points. The same reference proposes for a first source A a shooting sequence (e.g., the timing for shooting the source) given by (...,1,1,1,1,...) and for a second source B a shooting sequence given by (...,1,A,1,A,1...), where A represents a time delay.

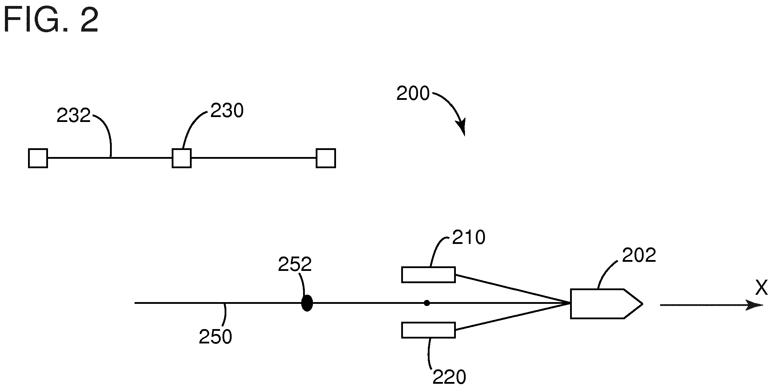

The inventors of this application have observed that the algorithm noted above can be improved if bandlimited sources are used for the simultaneous shooting, instead of airguns. More specifically, according to an embodiment illustrated in Figure 2, a seismic data acquisition system 200 includes a vessel 202 that is configured to tow two different sources, a first bandlimited source 210 and a second bandlimited source 220. The sources may be towed at a single depth, or at more than one depth. In one application, it is possible that each source is towed by its own vessel. Each bandlimited source may include a single source element or plural source elements. In other words, the first and second bandlimited sources may be individual vibrators or source arrays that include plural vibrators. If the first and second bandlimited sources are source arrays, the entire plurality of vibrators emits in the above-noted frequency band. Figure 2 also shows receivers 230 located on the ocean bottom (known in the art as ocean bottom nodes OBN) and connected to each other by cables 232. Alternatively, seismic sensors 252 may be located on one or more streamers 250 towed by the vessel 202 or another vessel.

The first bandlimited source 210 is driven to shoot based on a constant sequence (...,1,1,1,1,...), i.e., no timing error or delay from shot to shot. This shooting for the first bandlimited source will result in an energy pattern as illustrated in Figure 1A. However, the second bandlimited source 220 is driven with a 2:1 timing pattern, i.e., each second shooting is delayed with a given value $\Delta t$ relative to the timing pattern of the first bandlimited source, and this delay has an alternating sign, i.e., it is positive, then negative, then positive and so on. Thus, the shooting sequence of the second bandlimited source is given by (...,1, $\Delta t$,1, -$\Delta t$, 1, ...), where the time delay $\Delta t$ may be expressed as a function (e.g., a polynomial) or constant.

Note that the 2:1 pattern described herein relates to the fact that the embodiment describes a scenario with two sources. It is possible to generalize the concepts described herein to N sources with an N:1 pattern.

The energies from sources 210 and 220 will interfere in the central cone (K in Figure 1 B), but the energy from source 220, outside the cone, i.e., in region J in Figure 1B, does not interfere and can be used to separate the mixed energy from the two sources. In general, this approach may help the separation of low-frequency energy, but at higher frequencies, there will be further complications.

According to an embodiment, the first bandlimited source 210 emits in the frequency range [a, b], where "a" and "b" are integer numbers with b - a < 100 Hz and the second bandlimited source 220 emits in the frequency range [b, c], with "c" an integer number with and c - b < 100 Hz, and a < b < c. The first bandlimited source may be a low-frequency (LF) source and the second bandlimited source may be a high-frequency (HF) source. The two bandlimited sources are operating simultaneously as part of one or more seismic source arrays and also as part of a single seismic survey.

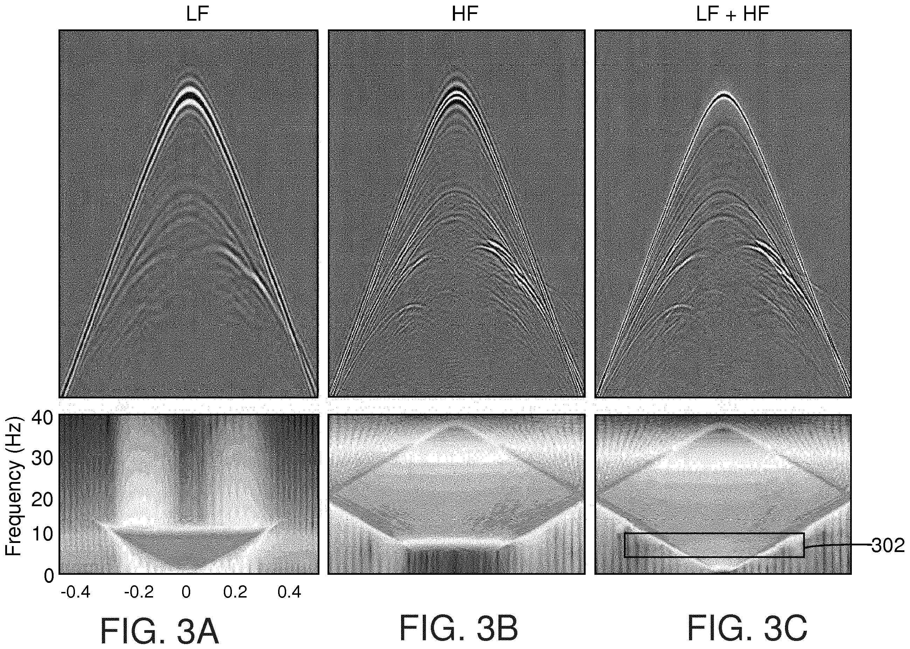

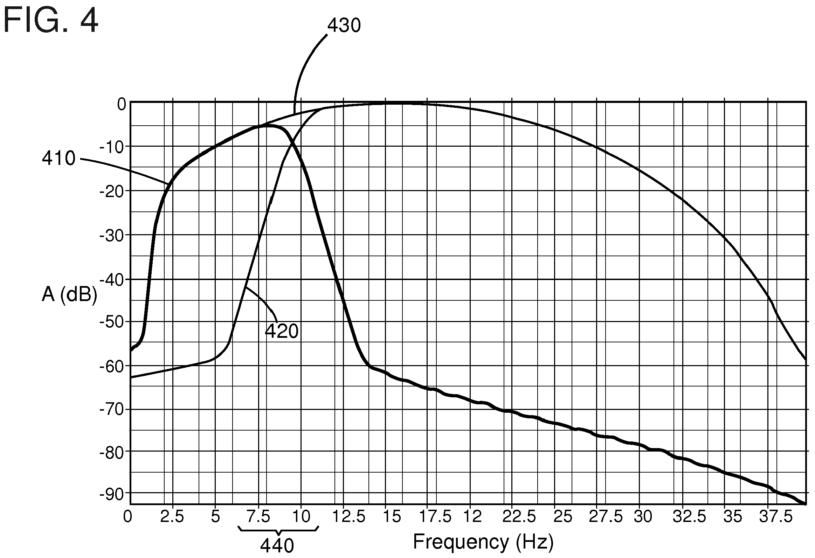

Figures 3A-3C show a receiver gather recorded with an ocean bottom node. Figure 3A shows raw seismic data from the LF bandlimited source (e.g., a marine vibrator) having a frequency range of about 0 - 10 Hz, Figure 3B shows raw seismic data from the HF bandlimited source (e.g., another marine vibrator) having a frequency range of about 10 - 40 Hz. The dB spectrum of these two bandlimited sources is shown in Figure 4, with curve 410 describing the energy level from the first bandlimited source 210, curve 420 describing the energy level from the second bandlimited source 220, and curve 430 showing the combined energy of the two sources. Note that although the first bandlimited frequency range [a, b] and the second bandlimited frequency range [b, c] are designed to form a continuous frequency range [a, c], each bandlimited source generates energy that corresponds to frequencies outside the designed frequency range, which makes the two sources to emit energy 430 within a frequency overlap range 440.

Note that although the overall frequency range of the two bandlimited sources is selected in this embodiment to have no gap, i.e., it extends continuously from 0 to 40 Hz, there is a 5 Hz cross-over range 440 of energy between the two bandlimited sources (between 7.5 Hz and 12.5 Hz as shown in Figure 4). The combination of the two emissions is illustrated in Figure 3C. The F-K domain for each source and the combined sources is shown at the bottom of Figures 3A-3C. Note that a region 302 in Figure 3C contains blended signals from both sources (corresponding to energy 430 and overlap frequency 440). Also note that because of the frequency band separation of the two sources 210 and 220, the regions above and below region 302 in Figure 3C are not contaminated in the FK domain, which is different from the case illustrated in Figure 1B. In other words, because of the selection of bandlimited sources, zone 100 of blended data illustrated in Figure 1B, which remains a problem even for the wavefield signal apparition theory introduced by the two papers discussed above, is avoided in the present embodiments because the LF data is not present in that zone.

The two bandlimited sources 210 and 220 operate in this embodiment in phase, with emission signals compensating for the free-surface ghost effect. However, for a real case, the following complications may arise: (1) the emitted signals may not be in phase, (2) the bandlimited sources may not be at the same depth (this will give rise to a variation in ghost amplitude/phase as a function of angle) and (3) the emitted signals in the overlap frequency range 440 may not be emitted in a spatially consistent way. These complications may make the process of energy separation challenging in the area 302 of frequency overlap between the LF and HF energies.

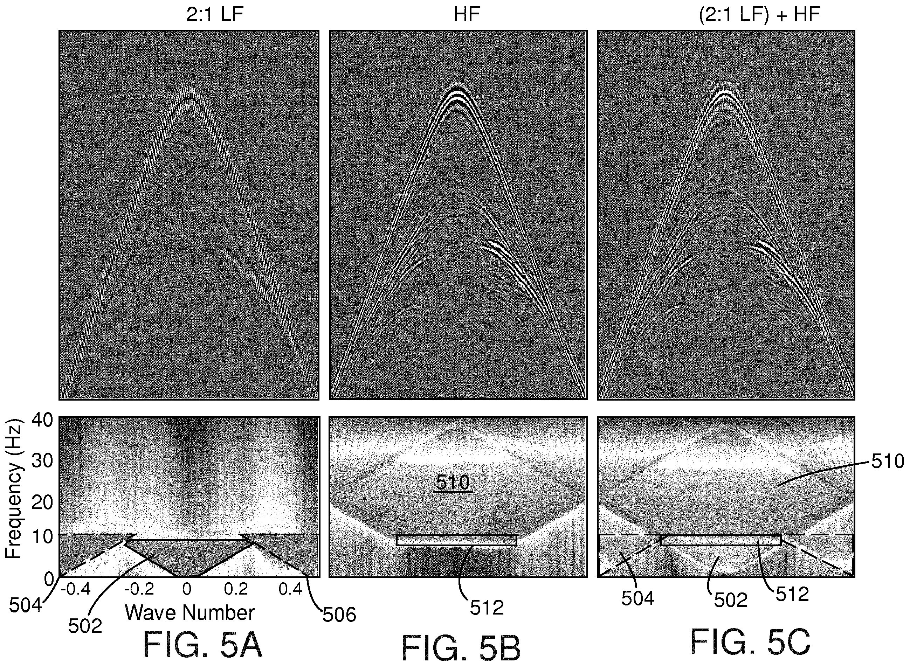

Thus, according to another embodiment, it is possible to encode (e.g., phase, amplitude or another parameter of the generated waves) one of the sources with a 2:1 alternating pattern to split the energy in the wavenumber direction (X direction in Figures 3A-3C and 5A-5C). In this embodiment, the timing of the LF bandlimited source is encoded with a 50 ms timing from sweep-to-sweep. Figure 5A shows how the LF energy has been split in the wavenumber direction in three areas 502, 504 and 506. Note that because the sources are bandlimited, the LF energy in areas 504 and 506 do not interfere with the HF energy in area 510, in Figure 5B. Only the LF energy in the area 502 partially interferes with the HF energy in the area 512.

However, following the processing discussed above with regard to Figures 1A and 1B, the largely uncontaminated LF energy in the areas 504 and 506 may be used to estimate the LF energy in the area 502, thus providing means to separate the LF energy in the overlap area 512. This advantage of the present embodiment cannot be achieved with airguns or other sources that are not bandlimited and selected to cover a frequency spectrum with no gaps as discussed above.

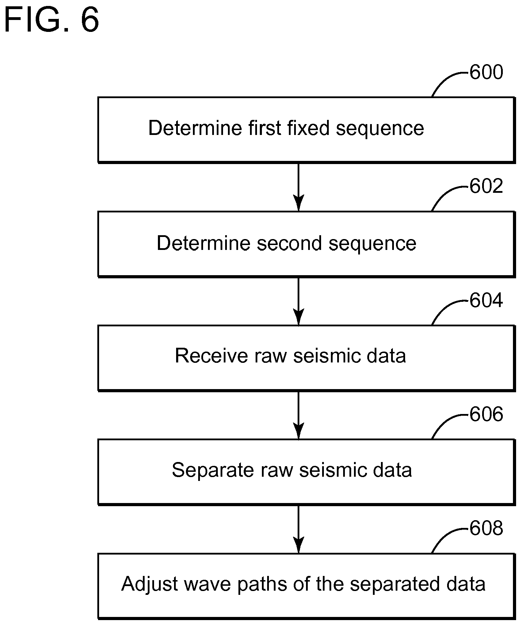

A method for separating or deblending the seismic raw data recorded by the seismic receivers due to simultaneous shooting of first and second bandlimited seismic sources is now discussed with regard to Figure 6. In step 600, a first bandlimited seismic source is considered (e.g., as moving along a first path X as illustrated in Figure 2) and a shooting schedule is calculated according to a first fixed shooting sequence. The first fixed shooting sequence includes equidistant (e.g., same spatial separation) first shooting positions that correspond to first energy emissions (e.g., the energy emitted by the first source). In step 602, a second bandlimited seismic source is considered (which can be moving along the same first path X or any other direction) and a second shooting sequence is calculated. The second shooting sequence includes second shooting positions that correspond to second energy emissions and the second energy emissions differ from the first energy emissions in at least one of an emission time, phase and amplitude. An emission time refers to, for example, the timing of the energy emission. An emission phase difference refers to, for example, the phase of the emission energy of one source relative to another source. An emission amplitude difference refers to, for example, the amplitude of the emission energy of one source relative to another source. Regarding the different emission time, this means that while the first bandlimited source emits energy regularly accordingly to the first shooting schedule, the second bandlimited source emits energy in a non-regular manner, according to the second shooting schedule. The regularity of the first bandlimited source means that its emission will be in the K cones whereas the energy emitted by the second bandlimited source will be split between the K and J cones. For example, in a particular embodiment, the second shooting positions are delayed with alternate positive and negative signs relative to the first shooting positions. In another embodiment, with regard to the difference in the emitted energy phase, the second energy emissions have a first phase difference relative to the first energy emissions, for odd second shooting positions, and a second phase difference relative to the first energy emissions, for even second shooting positions. In still another embodiment, with regard to the difference in the emitted energy amplitude, the second energy emissions have a first amplitude difference relative to the first energy emissions, for odd second shooting positions, and a second amplitude difference relative to the first energy emissions, for even second shooting positions.

In still another embodiment, the second sequence shares every second point in time with the first sequence, but the other points have an alternating time delay relative to the corresponding points in the first sequence. The time delay may be constant, but its sign alternates over the duration of the first sequence. The time delay may have a value between 2 ms and 1 s. The actual value is so selected that each recorded trace can be regularly sampled along the X direction.

In step 604, the seismic raw data recorded with the seismic receivers as a consequence of shooting the first and second bandlimited sources with the first and second shooting sequences is received and this data includes LF data generated by the first bandlimited source and HF data generated by the second bandlimited source. In step 606, the seismic raw data is processed as noted above in the first reference and explained with regard to Figures 5A-5C to separate the LF and HF data from the overlapping zone of interest. This step involves transforming the recorded raw seismic data from the time-space domain into the F-K domain (other domains are also possible as discussed later) and using the uncontaminated LF energy corresponding to the wavenumbers at which the HF energy is not present (i.e., regions 504 and 506 in Figure 5A) to estimate the LF energy corresponding to the wavenumbers at which the HF energy is present (i.e., region 502). In other words, step 606 may include transforming the raw seismic data from a time-space domain to a frequency-wavenumber domain, using energy associated with the shooting of the first bandlimited source with the time delay to reconstruct energy associated with the shooting of the first bandlimited source with no time delay, and subtracting the reconstructed energy from the raw seismic data to obtain the first and second bandlimited sets. In step 608, the separated data is used to generate an image of the surveyed subsurface, which is equivalent to adjusting the wave paths of the recorded raw data.

While the above embodiments have been discussed in the context of OBN, it should be understood that the same principles may be used on land, marine, ocean bottom cable (OBC), or transition zone data. The method is also not limited to the use of marine vibrator sources. Instead of time-shift encoding, the flexibility of some sources (for example, marine vibrators) allows for much more flexible signal encoding. Examples are not limited to phase encoding, amplitude encoding, or another encoding. Transforms other than the FK domain may be used, e.g., curvelet, rank reduction, SVD, wavelet, complex wavelet, tau-p, etc. The principles discussed above may be extended beyond one spatial direction.

Another solution for shooting the first and second bandlimited sources so that the recorded raw data can be deblended is now discussed. For this embodiment, consider again the marine acquisition system 200 illustrated in Figure 2 as having a LF bandlimited source 210 emitting energy in the frequency range of 2.5 Hz to 10 Hz and a HF bandlimited source 220 emitting energy in the frequency range of 10 Hz to 40 Hz. One skilled in the art would understand that other numbers are possible. Further, consider that the first and second bandlimited sources have been positioned at different depths in the water-column, so that the frequencies being emitted will benefit from the constructive interference of the free surface ghost. In this case, maximum constructive interference for vertical take-off energy will be at a frequency given by: f=v/4z, where f is the frequency, v is water velocity, and z is the source's depth. While the examples of 2.5 to 10 Hz and 10 to 40 Hz are discussed here, it should be understood that other frequency ranges may be used, for example LF: 5 to 25Hz and HF: 25 to 100Hz.

When the first and second bandlimited sources operate simultaneously at different frequencies, the emitted signals will be orthogonal and as such, any interfering energy resulting from the LF and HF operating at the same time will be orthogonal, i.e., the recorded raw data is not blended. However, for practical reasons, it may be necessary to operate the LF and HF bandlimited sources at the same frequency at the same time, at least for a small overlap of the overall bandwidth.

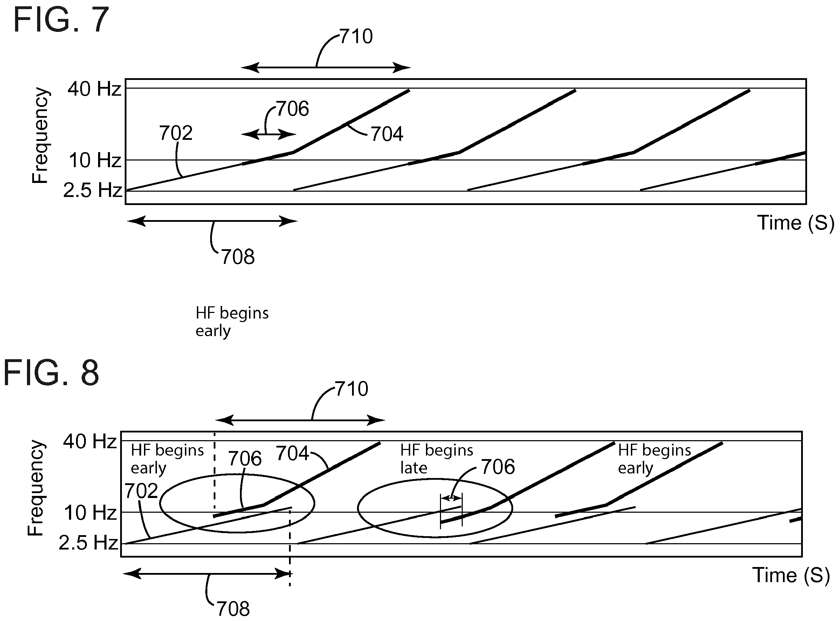

If this is the case, in order to be able to deblend the recorded raw data, it is possible to synchronize the sweeps 702 and 704 of the LF and HF bandlimited sources 210 and 220, so that the energy in the overlap frequency range 706 is in phase, as shown in Figure 7. In this figure, line 702 represents the LF emission frequency as a function of time, line 704 represents the HF emission frequency as a function of time and line 706 represents when both LF and HF are emitting at the same frequency and at the same time. Figure 7 also shows the LF emission length 708 and the HF emission length 710. It should be noted that the aim of this solution is that during the time when the two bandlimited sources emit the same frequency at the same time (line 706), the HF and LF bandlimited sources also emit in phase, and thus, in some sense, they may be considered to operate as a single source.

The free-surface ghost effect will modify the amplitude and phase of the resulting signal as now discussed. The HF and LF driving signals for the two bandlimited sources may be designed so that the net signal, leaving the two sources in a given direction (e.g., vertically downwards), will be in phase. For example, in the frequency domain, it is possible to express this in phase condition as follows:

$$Phase\{H(e^{2\pi i f p_z z_H} + Re^{-2\pi i f p_z z_H})\} = Phase\{L(e^{2\pi i f p_z z_L} + Re^{-2\pi i f p_z z_L})\},$$

where,

> $H$: HF emission signal;
> $z_H$: HF source depth;
> $L$: LF emission signal;
> $z_L$: LF source depth
> $p_z$: Vertical slowness = $1/v_w$, where $v_w$ is the speed of sound in water; and
> '*Phase*' calculates the phase of the re-ghosted and surface re-datumed emission.

It should be understood that the *given direction* may not be vertical and/or may vary as a function of time. For example, the phase of individual bandlimited sources within a source array may be adjusted relative to each other in order to steer the emitted beam direction, thus benefiting from the maximum energy to a preferential direction. This direction may vary as a function of time or may be fixed. Note that this is not possible with a traditional air gun.

One notes from Figure 7 that for this approach to be successful, the two bandlimited sources need to be synchronized (their phases) and the sweep length 708 of the LF source needs to be equal the sweep length 710 of the HF source. If the sweep lengths 708 and 710 are not equal, there would have to be a period of time where one of the bandlimited source is idle. This is not easily achievable in practice. Note that according to this approach, the sweeps may be linear or non-linear as long as the net output in the frequency overlap is in phase.

However, according to another embodiment, it is possible to combine the approach discussed with regard to Figure 7 with the concept discussed with regard to Figure 6, i.e., to modify the phase (or other parameter) of the HF source, from sweep to sweep to avoid these restrictions and also to be able to deblend the energy. More specifically, in one application is possible to achieve this modification by repeating the following sequence: the sweep 704 of the HF source is designed to be in phase with the sweep 702 of the LF source after which the next sweep of the HF source is delayed with a given phase relative to the sweep of the LF source. This sequence is then repeated for the HF source while both the HF and LF sources advance along a given path. Also, the LF source follows a constant (...,1,1,1, ...) shooting sequence along this given path.

In another embodiment, the start time of the HF source sweep 704 may be delayed relative to the LF source sweep 702 for consecutive sweeps as shown in Figure 8, i.e., with a positive delay (early start) followed by a negative delay (late start) followed again by a positive delay and so on. One advantage of this embodiment is that there is no need to synchronize the emissions from the LF and HF bandlimited sources. This means that different sweep lengths for the LF and HF bandlimited sources may be used.

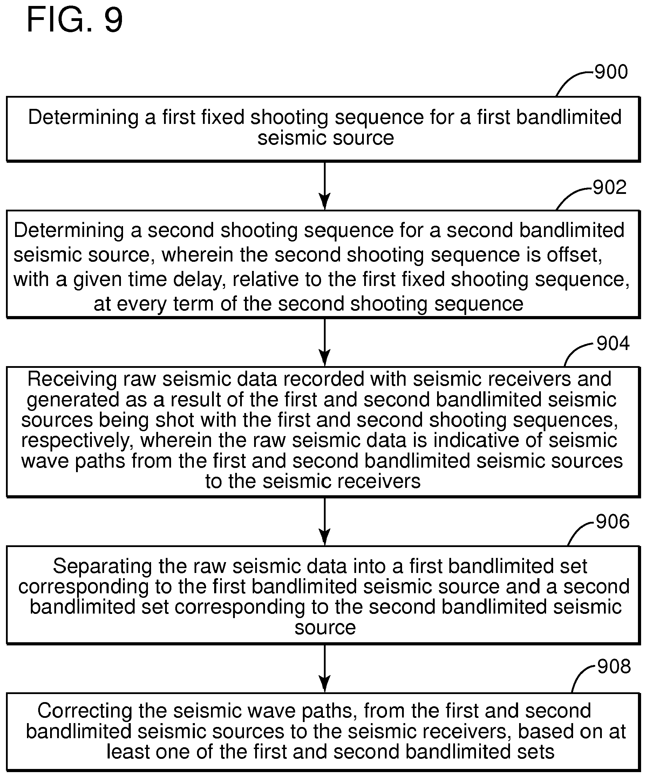

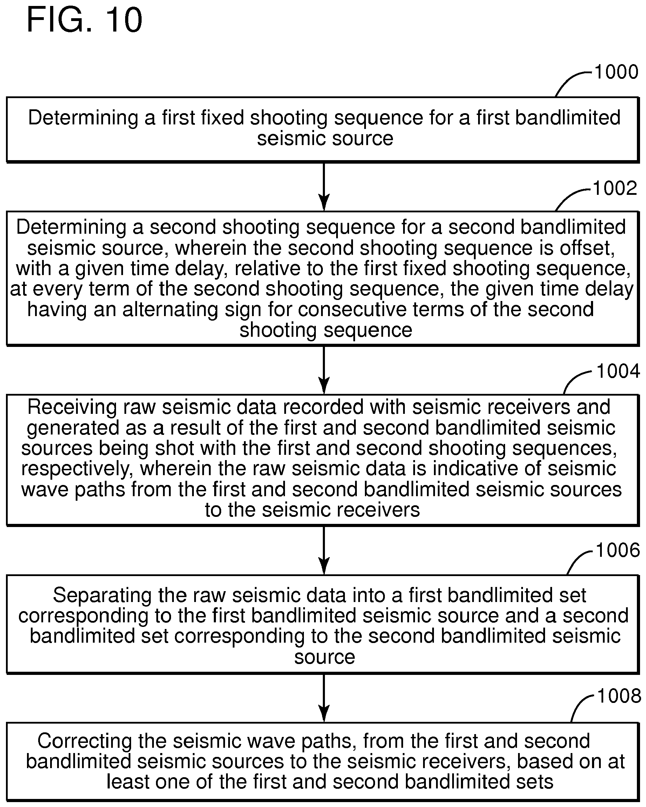

Some methods that use these approaches are now discussed with reference to Figures 9 and 10. Figure 9 illustrates a method for correcting seismic wave propagation paths through the earth. The method includes a step 900 of determining a first fixed shooting sequence for a first bandlimited seismic source, a step 902 of determining a second shooting sequence for a second bandlimited seismic source, wherein the second shooting sequence is offset, with a given time delay, relative to the first fixed shooting sequence, at every term of the second shooting sequence, a step 904 of receiving raw seismic data recorded with seismic receivers and generated as a result of the first and second bandlimited seismic sources being shot with the first and second shooting sequences, respectively, wherein the raw seismic data is indicative of seismic wave paths from the first and second bandlimited seismic sources to the seismic receivers. The method also includes a step 906 of separating the raw seismic data into a first bandlimited set corresponding to the first bandlimited seismic source and a second bandlimited set corresponding to the second bandlimited seismic source, and a step 908 of correcting the seismic wave paths, from the first and second bandlimited seismic sources to the seismic receivers, based on at least one of the first and second bandlimited sets. The first bandlimited source has a first sweep, the second bandlimited source has a second sweep, the first sweep is in phase with the second sweep for one term of the second shooting sequence and the second sweep has a phase delay relative to the first sweep for a next term of the second shooting sequence. The given time delay may be a constant.

In one application, the first sweep overlaps with the second sweep so that the first and second bandlimited sources emit the same frequency at the same time during an overlap frequency range. In another application, the first sweep has a same length as the second sweep. In still another application, the first sweep and the second sweep cover a given frequency range with no gaps.

In another application, the first sweep overlaps with the second sweep so that the first and second bandlimited sources emit the same frequency at the same time during an overlap frequency range. In one application, the first sweep and the second sweep cover a given frequency range with no gaps.

In still another application, the first bandlimited seismic source is configured to generate a first energy in a first frequency range and the second bandlimited seismic source is configured to generate a second energy in a second frequency range, and the first and second frequency ranges form a continuous frequency range. In an embodiment, the first and second bandlimited sources generate energy within an overlap frequency range which extends into the first frequency range and the second frequency range. It is possible that a size of the overlap frequency range changes from one term to a next term of the second shooting sequence. These steps may be applied to a system for which the first bandlimited seismic source is a low-frequency vibrator and the second bandlimited seismic source is a high-frequency vibrator and first and second frequency ranges corresponding to the first and second bandlimited sources form a continuous frequency range.

According to another embodiment illustrated in Figure 10, there is a method for correcting seismic wave propagation paths through the earth and this method includes a step 1000 of determining a first fixed shooting sequence for a first bandlimited seismic source, a step 1002 of determining a second shooting sequence for a second bandlimited seismic source, wherein the second shooting sequence is offset, with a given time delay, relative to the first fixed shooting sequence, at every term of the second shooting sequence, a step 1004 of receiving raw seismic data recorded with seismic receivers and generated as a result of the first and second bandlimited seismic sources being shot with the first and second shooting sequences, respectively, wherein the raw seismic data is indicative of seismic wave paths from the first and second bandlimited seismic sources to the seismic receivers, a step 1006 of separating the raw seismic data into a first bandlimited set corresponding to the first bandlimited seismic source and a second bandlimited set corresponding to the second bandlimited seismic source, and a step 1008 of correcting the seismic wave paths, from the first and second bandlimited seismic sources to the seismic receivers, based on at least one of the first and second bandlimited sets. The given time delay has an alternating sign for consecutive terms of the second shooting sequence, as illustrated in Figure 8.

In one application, the first bandlimited seismic source is configured to generate a first energy in a first frequency range 702 and the second bandlimited seismic source is configured to generate a second energy in a second frequency range 704, and the first and second frequency ranges form a continuous frequency range. In one application, the first and second bandlimited sources generate energy over an overlap frequency range 706 that extends into the first frequency range 702 and the second frequency range 704. In another application, a size of the overlap frequency range 706 changes from one term to a next term of the second shooting sequence, as also illustrated by Figure 8. In one embodiment, the first bandlimited seismic source is a low-frequency vibrator and the second bandlimited seismic source is a high-frequency vibrator and first and second frequency ranges corresponding to the first and second bandlimited sources form a continuous frequency range.

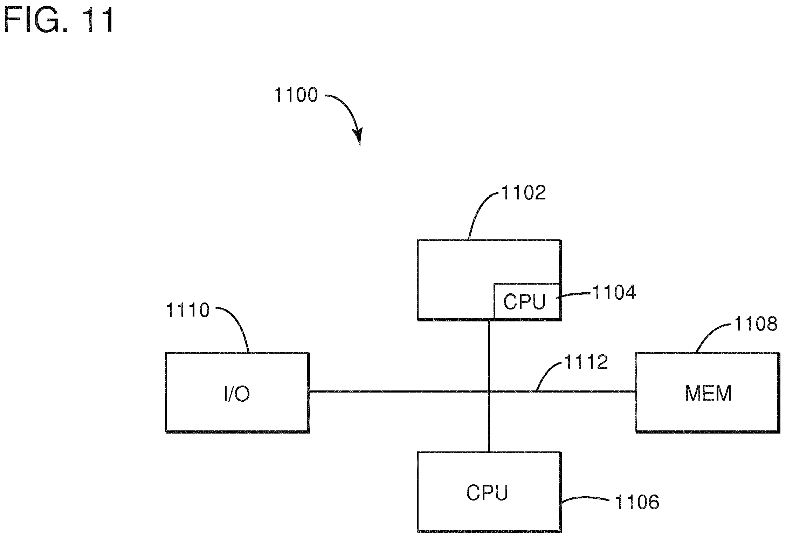

Figure 11 illustrates a block diagram of a seismic data processing apparatus 1100 usable to perform these methods, according to an embodiment. Hardware, firmware, software or a combination thereof may be used to perform the various steps and operations. Apparatus 1100 includes a computer or server 1102 having one or more central processing units (CPU) 1104 in communication with a communication module 1106, one or more input/output devices (I/O) 1110 and at least one storage device 1108. Hardware, firmware, software or a combination thereof may be used to perform the various steps and operations of the methods described in this section.

Communication module 1106 may be used to obtain the recorded raw seismic dataset. Communication module 1106 may intermediate wired or wireless communication of server 1102 with other computing systems, databases and data acquisition systems across one or more local or wide area networks 1112.

I/O devices 1110 may be used to communicate with a user or to display any images or models of the surveyed underground formation. I/O devices 1110 may include keyboards, point and click type devices, audio devices, optical media devices and visual displays.

CPU 1104, which is in communication with communication module 1106 and storage device 1108, is configured to perform the determination of the first and second shooting sequences and also to process the raw seismic data to extract deblended first and second datasets as in any of the methods described in this document.

Storage device 1108 may include magnetic media such as a hard disk drive (HDD), solid state memory devices including flash drives, ROM and RAM and optical media. The storage device may store data as well as software code for executing various functions including the deblending methods described in this section.

The disclosed exemplary embodiments provide methods and systems for deblending seismic data. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

**EP 3 260 887 A1**

**Claims**

1. A method for correcting seismic wave propagation paths through the earth, the method comprising:

   determining (600) a first fixed shooting sequence for a first bandlimited seismic source (210), wherein the first fixed shooting sequence includes equidistant first shooting positions that correspond to first energy emissions;
   determining (602) a second shooting sequence for a second bandlimited seismic source (220), wherein the second shooting sequence includes second shooting positions that correspond to second energy emissions, and the second energy emissions differ from the first energy emissions in at least one of an emission time, phase and amplitude;
   receiving (604) raw seismic data recorded with seismic receivers (252) and generated as a result of the first and second energy emissions, wherein the raw seismic data is indicative of seismic wave paths from the first and second bandlimited seismic sources to the seismic receivers;
   separating (606) the raw seismic data into a first bandlimited set corresponding to the first bandlimited seismic source and a second bandlimited set corresponding to the second bandlimited seismic source; and
   correcting (608) the seismic wave paths, from the first and second bandlimited seismic sources to the seismic receivers, based on at least one of the first and second bandlimited sets.

2. The method of Claim 1, wherein the second shooting positions are delayed with alternate positive and negative signs relative to the first shooting positions.

3. The method of Claim 1, wherein the second energy emissions have a first phase difference relative to the first energy emissions, for odd second shooting positions, and a second phase difference relative to the first energy emissions, for even second shooting positions.

4. The method of Claim 1, wherein the second energy emissions have a first amplitude difference relative to the first energy emissions, for odd second shooting positions, and a second amplitude difference relative to the first energy emissions, for even second shooting positions.

5. The method of Claim 1, wherein the step of separating comprises:

   transforming the raw seismic data from a time-space domain to a frequency-wavenumber domain.

6. The method of Claim 1, wherein the first and second bandlimited seismic sources are vibrators.

7. The method of Claim 1, wherein the first bandlimited seismic source is configured to generate a first energy in a first frequency range and the second bandlimited seismic source is configured to generate a second energy in a second frequency range, and the first and second frequency ranges form a continuous frequency range.

8. The method of Claim 7, wherein the first and second bandlimited sources generate energy over an overlap frequency range which extends into the first frequency range and the second frequency range.

9. The method of Claim 1, wherein the first bandlimited seismic source is a low-frequency vibrator and the second bandlimited seismic source is a high-frequency vibrator and first and second frequency ranges corresponding to the first and second bandlimited sources form a continuous frequency range.

10. The method of Claim 1, wherein the first shooting sequence is (...,1,1,1, ...) and the second shooting sequence is (...,1, $\Delta t$, 1, -$\Delta t$, 1, ...), where $\Delta t$ is a time delay.

11. A computing device (1100) for correcting seismic wave propagation paths through the earth, the computing device comprising:

   a processor (1104) configured to,
   determine (600) a first fixed shooting sequence for a first bandlimited seismic source (210), wherein the first fixed shooting sequence includes equidistant first shooting positions that correspond to first energy emissions, and
   determine (602) a second shooting sequence for a second bandlimited seismic source (220), wherein the second shooting sequence includes second shooting positions that correspond to second energy emissions, and the second energy emissions differ from the first energy emissions in at least one of an emission time, phase and amplitude; and

an interface (1110) connected to the processor (1104) and configured to receive (604) raw seismic data recorded with seismic receivers (252) and generated as a result of the first and second energy emissions, wherein the raw seismic data is indicative of seismic wave paths from the first and second bandlimited seismic sources to the seismic receivers,

wherein the processor is further configured to,

separate (606) the raw seismic data into a first bandlimited set corresponding to the first bandlimited seismic source and a second bandlimited set corresponding to the second bandlimited seismic source, and

correct (608) the seismic wave paths, from the first and second bandlimited seismic sources to the seismic receivers, based on at least one of the first and second bandlimited sets.

12. The computing device of Claim 11, wherein the second shooting positions are delayed with alternate positive and negative signs relative to the first shooting positions.

13. The computing device of Claim 11, wherein the second energy emissions have a first phase difference relative to the first energy emissions, for odd second shooting positions, and a second phase difference relative to the first energy emissions, for even second shooting positions.

14. The computing device of Claim 11, wherein the second energy emissions have a first amplitude difference relative to the first energy emissions, for odd second shooting positions, and a second amplitude difference relative to the first energy emissions, for even second shooting positions.

15. The computing device of Claim 11, wherein the processor is further configured to:

transform the raw seismic data from a time-space domain to a frequency-wavenumber domain.

FIG. 1A

FIG. 1B

FIG. 2

LF                      HF                      LF + HF

Frequency (Hz): 40, 30, 20, 10, 0

-0.4  -0.2  0  0.2  0.4

302

FIG. 3A              FIG. 3B              FIG. 3C

EP 3 260 887 A1

FIG. 4

FIG. 5A

FIG. 5B

FIG. 5C

# FIG. 6

```
                                                              ⌐600
┌─────────────────────────────────────────┐
│        Determine first fixed sequence       │
└─────────────────────────────────────────┘
                      │
                      ▼                       ⌐602
┌─────────────────────────────────────────┐
│         Determine second sequence           │
└─────────────────────────────────────────┘
                      │
                      ▼                       ⌐604
┌─────────────────────────────────────────┐
│          Receive raw seismic data            │
└─────────────────────────────────────────┘
                      │
                      ▼                       ⌐606
┌─────────────────────────────────────────┐
│          Separate raw seismic data           │
└─────────────────────────────────────────┘
                      │
                      ▼                       ⌐608
┌─────────────────────────────────────────┐
│      Adjust wave paths of the separated data │
└─────────────────────────────────────────┘
```

**FIG. 7**

Frequency: 40 Hz, 10 Hz, 2.5 Hz

Time (S)

710, 706, 704, 702, 708

**FIG. 8**

Frequency: 40 Hz, 10 Hz, 2.5 Hz

Time (S)

HF begins early

HF begins early

HF begins late

HF begins early

710, 706, 704, 702, 708

# FIG. 9

900

Determining a first fixed shooting sequence for a first bandlimited seismic source

902

Determining a second shooting sequence for a second bandlimited seismic source, wherein the second shooting sequence is offset, with a given time delay, relative to the first fixed shooting sequence, at every term of the second shooting sequence

904

Receiving raw seismic data recorded with seismic receivers and generated as a result of the first and second bandlimited seismic sources being shot with the first and second shooting sequences, respectively, wherein the raw seismic data is indicative of seismic wave paths from the first and second bandlimited seismic sources to the seismic receivers

906

Separating the raw seismic data into a first bandlimited set corresponding to the first bandlimited seismic source and a second bandlimited set corresponding to the second bandlimited seismic source

908

Correcting the seismic wave paths, from the first and second bandlimited seismic sources to the seismic receivers, based on at least one of the first and second bandlimited sets

# FIG. 10

1000

Determining a first fixed shooting sequence for a first bandlimited seismic source

1002

Determining a second shooting sequence for a second bandlimited seismic source, wherein the second shooting sequence is offset, with a given time delay, relative to the first fixed shooting sequence, at every term of the second shooting sequence, the given time delay having an alternating sign for consecutive terms of the second shooting sequence

1004

Receiving raw seismic data recorded with seismic receivers and generated as a result of the first and second bandlimited seismic sources being shot with the first and second shooting sequences, respectively, wherein the raw seismic data is indicative of seismic wave paths from the first and second bandlimited seismic sources to the seismic receivers

1006

Separating the raw seismic data into a first bandlimited set corresponding to the first bandlimited seismic source and a second bandlimited set corresponding to the second bandlimited seismic source

1008

Correcting the seismic wave paths, from the first and second bandlimited seismic sources to the seismic receivers, based on at least one of the first and second bandlimited sets

EP 3 260 887 A1

# FIG. 11

Europäisches
Patentamt

European
Patent Office

Office européen
des brevets

# EUROPEAN SEARCH REPORT

Application Number

EP 17 30 5761

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/314536 A1 (BAGAINI CLAUDIO [NO]) 13 December 2012 (2012-12-13) * paragraphs [0004], [0019], [0022] - [0023], [0025], [0028] - [0043] * | 1-15 | INV. G01V1/00 ADD. G01V1/37 |
| X | CLAUDIO BAGAINI: "Acquisition and processing of simultaneous vibroseis data", GEOPHYSICAL PROSPECTING, BLACKWELL SCIENCE, vol. 58, no. 1 1 January 2010 (2010-01-01), pages 81-99, XP002694674, ISSN: 0016-8025, DOI: 10.1111/J.1365-2478.2009.00842.X Retrieved from the Internet: URL:http://onlinelibrary.wiley.com/doi/10.1111/j.1365-2478.2009.00842.x/pdf [retrieved on 2009-11-06] * page 84, column 2 - page 85, column 1 * * page 86, column 2 - page 87, column 2 * | 1,11 | |
| X | US 2014/269173 A1 (COSTE EMMANUEL [US] ET AL) 18 September 2014 (2014-09-18) * paragraphs [0007], [0024] - [0025], [0042] - [0044] * | 1,11 | TECHNICAL FIELDS SEARCHED (IPC) G01V |
| A | US 2009/116337 A1 (CHIU STEPHEN K [US] ET AL) 7 May 2009 (2009-05-07) * paragraphs [0040], [0044] - [0047], [0050] - [0052] * | 1-15 | |
| A | US 8 724 428 B1 (SALLAS JOHN [US]; CGGVERITAS SERVICES SA [FR]) 13 May 2014 (2014-05-13) * column 3, line 44 - column 4, line 25 * | 1-15 | |

The present search report has been drawn up for all claims

| Place of search | Date of completion of the search | Examiner |
|---|---|---|
| The Hague | 13 November 2017 | Naujoks, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 5761

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2017

| Patent document cited in search report | Publication date | Patent family member(s) | Publication date |
|---|---|---|---|
| US 2012314536 A1 | 13-12-2012 | AU 2012268004 A1 | 09-01-2014 |
| | | AU 2016202629 A1 | 19-05-2016 |
| | | CA 2838403 A1 | 13-12-2012 |
| | | CN 103582828 A | 12-02-2014 |
| | | EP 2699942 A2 | 26-02-2014 |
| | | MX 336365 B | 18-01-2016 |
| | | RU 2013158695 A | 20-07-2015 |
| | | US 2012314536 A1 | 13-12-2012 |
| | | WO 2012170608 A2 | 13-12-2012 |
| US 2014269173 A1 | 18-09-2014 | EP 2972500 A1 | 20-01-2016 |
| | | US 2014269173 A1 | 18-09-2014 |
| | | WO 2014152125 A1 | 25-09-2014 |
| US 2009116337 A1 | 07-05-2009 | PE 15052009 A1 | 14-10-2009 |
| | | US 2009116337 A1 | 07-05-2009 |
| | | WO 2009058425 A1 | 07-05-2009 |
| US 8724428 B1 | 13-05-2014 | AU 2013254903 A1 | 29-05-2014 |
| | | BR 102013029523 A2 | 29-10-2014 |
| | | CA 2832567 A1 | 15-05-2014 |
| | | CN 103823243 A | 28-05-2014 |
| | | GB 2508728 A | 11-06-2014 |
| | | US 8724428 B1 | 13-05-2014 |
| | | US 2014211590 A1 | 31-07-2014 |
| | | WO 2014076184 A2 | 22-05-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62353614 B

- US 8837259 B

**Non-patent literature cited in the description**

- **ROBERTSSON, J. ; AMUNDSEN, L ; SJOEN PEDERSEN, A.** Wavefield signal apparition, part I -Theory. *EAGE conference proceedings,* 2016

- **SJOEN PEDERSEN, A. ; AMUNDSEN, L ; ROBERTSSON, J.** Wavefield signal apparition, Part II - Application to simultaneous sources and their separation. *EAGE conference proceedings) have presented a source separation algorithm called "Wavefield Signal Apparition.,* 2016